(19)

**Europäisches Patentamt**

**European Patent Office**

**Office européen des brevets**

(11) **EP 2 150 882 B1**

(12) **FASCICULE DE BREVET EUROPEEN**

(45) Date de publication et mention
de la délivrance du brevet:
**12.09.2012 Bulletin 2012/37**

(21) Numéro de dépôt: **08805759.1**

(22) Date de dépôt: **07.05.2008**

(51) Int Cl.:
**G06F 3/043** (2006.01)     **H03K 17/96** (2006.01)

(86) Numéro de dépôt international:
**PCT/FR2008/050810**

(87) Numéro de publication internationale:
**WO 2008/142345 (27.11.2008 Gazette 2008/48)**

(54) **PROCEDE POUR LOCALISER UN TOUCHER SUR UNE SURFACE ET DISPOSITIF POUR LA MISE EN OEUVRE DE CE PROCEDE.**

VERFAHREN ZUR ORTUNG EINER BERÜHRUNG AUF EINER OBERFLÄCHE UND VORRICHTUNG ZUR ANWENDUNG DIESES VERFAHRENS

METHOD FOR LOCATING A TOUCH ON A SURFACE AND DEVICE FOR IMPLEMENTING THIS METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.05.2007 FR 0703651**

(43) Date de publication de la demande:
**10.02.2010 Bulletin 2010/06**

(73) Titulaire: **Commissariat à l'Énergie Atomique et aux Énergies Alternatives**
**75015 Paris (FR)**

(72) Inventeurs:
• **NIKOLOVSKI, Jean-Pierre**
**F-92260 Fontenay Aux Roses (FR)**
• **ING, Ros Kiri**
**F-75012 Paris (FR)**
• **FINK, Mathias**
**F-92190 Meudon (FR)**

(74) Mandataire: **Cabinet Plasseraud**
**52, rue de la Victoire**
**75440 Paris Cedex 09 (FR)**

(56) Documents cités:
**WO-A-95/11499        WO-A-03/067511**
**WO-A-2006/133018     FR-A- 2 841 022**
**US-A1- 2006 139 339**

EP 2 150 882 B1

## Description

La présente invention est relative aux procédés pour localiser un toucher sur une surface et aux dispositifs pour la mise en oeuvre de ces procédés.

L'invention concerne un procédé pour localiser un toucher sur une surface selon la revendication 1 et un dispositif pour la mise en oeuvre de ce procédé selon la revendication 17.

Plus particulièrement, l'invention concerne un procédé pour localiser un toucher (par exemple d'un doigt, d'un stylet ou d'un autre dispositif) sur une surface tactile appartenant à un objet, ce procédé comprenant au moins les étapes suivantes :

(a) une étape de surveillance au cours de laquelle on fait propager dans l'objet des ondes mécaniques élastique, à partir d'au moins un point d'émission appartenant à l'objet et on capte lesdites ondes mécaniques en au moins un point de réception appartenant à l'objet pour obtenir au moins un signal capté,

(b) et une étape de localisation au cours de laquelle on localise un toucher sur ladite surface tactile en analysant le signal capté.

Le document FR-A-2 644 309 décrit un exemple d'un tel procédé qui présente notamment les inconvénients suivants :

- il nécessite un appareillage complexe et coûteux, incluant un grand nombre de transducteurs,
- et il présente une résolution limitée.

Il est également connu du document WO 2006/133018 de combiner différentes techniques de localisation de toucher connues dans l'art, mais au prix d'une complexité accrue.

Il est également connu des documents FR-A-2 841 022 et WO 03/067511 des techniques de localisation utilisant un principe passif, mais il n'est pas possible de détecter des touchers ayant une énergie d'impact très faible avec ces méthodes passives.

La présente invention a notamment pour but de pallier ces inconvénients.

A cet effet, selon l'invention, un procédé du genre en question est caractérisé en ce qu'au cours de l'étape de localisation, lesdites ondes mécaniques élastiques émises comportent au moins deux composantes fréquentielles correspondant à au moins deux fréquences propres vibratoires de l'objet de manière à établir des régimes de résonance, et en ce qu'on compare au moins certaines caractéristiques du signal capté à une bibliothèque de caractéristiques de référence, lesdites caractéristiques de référence correspondant respectivement à des touchers en des zones prédéterminées de ladite surface tactile.

Grâce à ces dispositions, on obtient un procédé de localisation de toucher qui ne nécessite pas un grand nombre de transducteurs (typiquement, on peut faire appel par exemple à un transducteur en émission et un ou deux transducteurs en réception) et qui peut néanmoins atteindre aisément une précision de localisation millimétrique, permettant notamment de réaliser une interface tactile de grande précision (par exemple un écran tactile, un clavier tactile ou autre).

Dans divers modes de réalisation du procédé selon l'invention, on peut éventuellement avoir recours en outre à l'une et/ou à l'autre des dispositions suivantes :

- lesdites caractéristiques du signal capté utilisées lors de l'étape de localisation comprennent au moins une amplitude du signal ;
- lesdites caractéristiques du signal capté utilisées lors de l'étape de localisation comprennent au moins une phase du signal ;
- lesdites caractéristiques du signal capté utilisées lors de l'étape de localisation correspondent à un nombre $N$ de fréquences prédéterminées, $N$ étant un entier au moins égal à 2, de préférence au moins égal à 10 ;
- lesdites fréquences prédéterminées sont des fréquences propres de l'objet, excitées par lesdites ondes mécaniques ;
- lesdites fréquences prédéterminées sont telles que le spectre du signal reçu présente, auxdites fréquences prédéterminées, une amplitude supérieure à une valeur seuil ;
- lesdites fréquences prédéterminées sont séparées deux à deux par un écart supérieur à un écart minimum prédéterminé ;
- ledit écart minimum prédéterminé est au moins égal à 150 Hz, de préférence supérieur à 200 Hz et de façon encore plus préférée supérieur à 300 Hz ;
- lesdites fréquences prédéterminées sont distribuées dans une plage allant de 10 à 100 kHz, préférentiellement de 15 à 70 kHz ;
- au moins une desdites fréquences prédéterminées est inférieure à 30 kHz et au moins une desdites fréquences prédéterminées est supérieure à 50 kHz ;
- l'objet utilisé comprend une plaque qui forme ladite surface tactile ;
- lesdites ondes mécaniques sont des ondes de Lamb ;
- lesdites ondes de Lamb sont des ondes de flexion ;
- lesdites ondes de Lamb sont des ondes antisymétriques A0 ;
- les points d'émission et de réception utilisés au cours de l'étape de surveillance sont disposés de façon à ne se trouver sur aucun axe de symétrie de l'objet ;
- l'étape de surveillance est répétée à une cadence de plusieurs dizaines de fois par seconde, de préférence au moins égale à 50 fois par seconde ;
- au cours de l'étape de surveillance, on émet au moins une forme d'onde à au moins une desdites fréquences prédéterminées, pendant une fenêtre temporelle d'émission de durée suffisante pour que des résonances se construisent dans ledit objet ;

- au cours de l'étape de surveillance, on émet une trame comprenant N formes d'ondes superposées aux N fréquences prédéterminées (lesdites N formes d'ondes peuvent être choisies par exemple parmi des formes d'onde sinusoïdales et des formes d'onde carrées) ;
- ladite fenêtre temporelle d'émission a une durée comprise entre 10 et 25 ms (par exemple de l'ordre de 16 ms) ;
- au cours de l'étape de surveillance, les ondes mécaniques sont captées pendant une fenêtre temporelle de réception ayant une durée comprise entre 5 et 15 ms (par exemple de l'ordre de 10 ms) ;
- la fenêtre temporelle de réception recouvre au moins partiellement la fenêtre temporelle d'émission, ledit au moins un point de réception étant distinct dudit au moins un point d'émission ;
- la fenêtre temporelle de réception suit la fenêtre temporelle d'émission sans la recouvrir ;
- au cours de l'étape de surveillance, on utilise un unique point d'émission, confondu avec le point de réception ;
- au cours de l'étape de surveillance, on émet depuis le point d'émission des ondes mécaniques générées par un signal impulsionnel (par exemple un signal en forme de créneau de largeur inférieur à une demi période de la fréquence propre la plus élevée), puis on capte lesdites ondes mécaniques pendant une fenêtre temporelle de réception ayant une durée comprise entre 5 et 15 ms ;
- au cours de l'étape de surveillance, le signal capté est numérisé sur au moins 8 bits de quantification, préférentiellement sur au moins 10 bits, et encore plus préférentiellement sur au moins 12 bit ;
- au cours de l'étape de surveillance, on détermine un vecteur d'absorption relative $Arel = [Arel_n]$ des ondes acoustiques en module et en phase aux N fréquences prédéterminées, où :
- $Arel_n = (r_m/r0_m)e^{j(\varphi m - \varphi 0m)}$,
- i est un indice compris entre 1 et N désignant la fréquence prédéterminée,
- m est un indice compris entre 1 et M désignant le point de réception,
- n=N(m-1)+i,
- $r0_{im}$ est une valeur d'amplitude correspondant à la fréquence prédéterminée i et au point de réception m en l'absence de toucher sur la surface tactile,
- $r_{im}$ est une valeur d'amplitude correspondant à la fréquence prédéterminée i et au point de réception m dans le cas d'un toucher sur la surface tactile,
- $\varphi 0_{im}$ est une valeur de phase correspondant à la fréquence prédéterminée i et au point de réception m en l'absence de toucher sur la surface tactile,
- $\varphi_{im}$ est une valeur de phase correspondant à la fréquence prédéterminée i et au point de réception m en présence de toucher sur la surface tactile,

- au cours de l'étape de surveillance, on détermine un vecteur d'absorption relatif centré normalisé

$$Anor = \left[ \frac{Ac_n}{\sqrt{\sum_{n=1}^{M.N} (Arel_n - \langle Arel \rangle)^2}} \right],$$

avec $Ac = [Ac_n] = [Arel_n - \langle Arel \rangle]$ et

$$\langle Arel \rangle = \frac{\sum_{n=1}^{M.N} Arel_n}{N.M} \quad ;$$

- au cours de l'étape de localisation, on déduit la position du toucher d'un test de corrélation croisée entre un vecteur d'absorption lié au vecteur d'absorption relative $A_{rel}$ et au moins une matrice de référence constituée par un ensemble de vecteurs d'absorption de référence $A_{ref}(x_t,y_u)$ correspondant à des touchers en des points prédéterminés de coordonnées $(x_t,y_u)$ échantillonnés sur la surface tactile de l'objet ;
- au cours de l'étape de localisation, on déduit la position du toucher d'un test de corrélation croisée entre un vecteur d'absorption relatif centré $A_{nor}$ et au moins une matrice de référence constituée par un ensemble de vecteurs d'absorption relatifs centrés normalisés de référence $A_{ref}(x_t,y_u)$ correspondant à des touchers en des points prédéterminés de coordonnées $(x_t,y_u)$ échantillonnés sur la surface tactile de l'objet ;
- au cours de l'étape de localisation, on utilise plusieurs matrices de référence correspondant à plusieurs étendues de toucher, on déduit une étendue du toucher à partir du vecteur d'absorption relatif $A_{rel}$ pour déterminer la matrice de référence à utiliser ;
- au cours de l'étape de localisation, on extrait du vecteur d'absorption relative $A_{rel}$ un sous vecteur $A_{relx}$, correspondant aux fréquences propres les plus sensibles à l'étendue du toucher, et on calcule le module de ce sous vecteur $A_{relx}$, puis on en déduit la matrice de référence à utiliser pour effectuer l'opération de corrélation croisée et en déduire la position du toucher ;
- pour constituer le sous vecteur $A_{relx}$, on ne retient que les fréquences propres pour lesquelles les composantes du vecteur d'absorption relative ont un module inférieur à 1 et ayant une variation sur la plaque inférieure à une valeur seuil (typiquement 4%) ;
- la matrice de référence est constituée par un ensemble de vecteurs d'absorption de référence $A_{ref}(x_t,y_u)$ correspondant à des touchers en des points prédéterminés de coordonnées $(x_t,y_u)$ échantillonnés sur la surface tactile de l'objet avec un pas inférieur à la demi-longueur d'onde de la fréquence spatiale la plus petite du spectre d'excitation ;

- au cours de l'étape d'observation, on calcule un module du vecteur d'absorption relatif et on compare ce module à une valeur seuil prédéterminée pour déterminer si un toucher est intervenu sur la surface tactile ;
- au cours de l'étape d'observation, on calcule un module du vecteur d'absorption relatif et on compare ce module au cours du temps à un profil dynamique particulier (par exemple une augmentation suivie d'une diminution rapide) pour déterminer si un toucher est intervenu sur la surface tactile.

Par ailleurs, l'invention a également pour objet un dispositif pour localiser un toucher sur une surface tactile appartenant à un objet, ce dispositif comportant au moins un transducteur adapté pour émettre et capter des ondes élastiques dans l'objet, ledit transducteur étant relié à au moins une unité centrale électronique adaptée pour :

- faire propager dans l'objet des ondes mécaniques par ledit au moins un transducteur et faire capter lesdites ondes mécaniques par ledit au moins un transducteur,
- et localiser un toucher sur ladite surface tactile en analysant le signal capté,

caractérisé en ce que ladite unité centrale électronique est adaptée pour comparer au moins certaines caractéristiques du signal capté à une bibliothèque de caractéristiques de référence, lesdites caractéristiques de référence correspondant respectivement à des touchers en des zones prédéterminées de ladite surface tactile.

Dans divers modes de réalisation du dispositif selon l'invention, on peut avoir recours en outre à l'une et/ou à l'autre des dispositions suivantes :

- le dispositif constitue un clavier tactile ;
- le dispositif est adapté pour déplacer continument un pointeur sur un écran d'affichage ;
- ledit au moins un transducteur est disposé en dehors de tout axe de symétrie de l'objet ;
- l'objet comporte une plaque qui inclut ladite surface tactile ;
- l'objet est recouvert d'un film souple absorbant (au niveau de la surface tactile ou sur une face opposée de l'objet), pour augmenter le phénomène d'absorption des ondes élastiques en cas de toucher.

D'autres caractéristiques et avantages de l'invention apparaîtront au cours de la description suivante de plusieurs de ses formes de réalisation, données à titre d'exemples non limitatifs, en regard des dessins joints.

Sur les dessins :

- la figure 1 est une vue schématique en perspective montrant un exemple de dispositif comprenant une interface tactile adaptée pour mettre en oeuvre un procédé selon une forme de réalisation de l'invention,
- la figure 2 est une vue en plan d'une plaque appartenant à l'interface acoustique du dispositif de la figure 1,
- la figure 3 est une vue partielle en coupe de la plaque de la figure 2,
- la figure 4 est un schéma bloc du dispositif de la figure 1,
- la figure 5 est une vue similaire à la figure 3, dans une deuxième forme de réalisation de l'invention,
- la figure 6 est une vue en coupe schématique d'un dispositif utilisable pour échantillonner l'interface acoustique de la figure 1 dans une phase préalable d'apprentissage,
- et les figures 7 et 8 sont des vues similaires à la figure 3, dans des troisième et quatrième formes de réalisation de l'invention.

Sur les différentes figures, les mêmes références désignent des éléments identiques ou similaires.

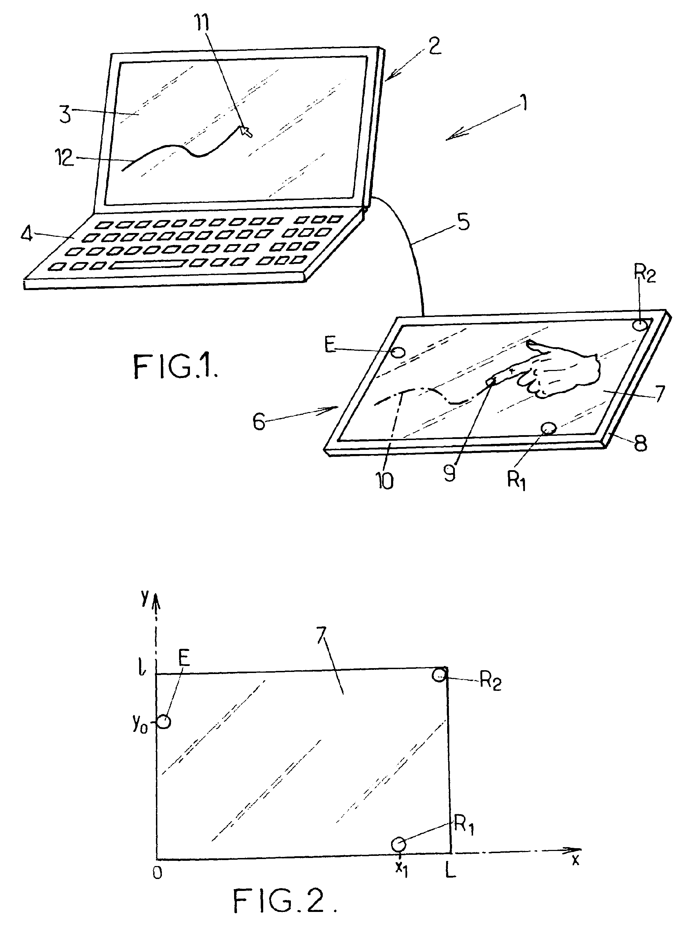

La figure 1 représente un dispositif 1 destiné à mettre en oeuvre la présente invention, qui comporte par exemple :

- un micro-ordinateur 2 doté notamment d'un écran 3 et d'un clavier 4,
- et une interface d'entrée tactile 6, se présentant par exemple sous la forme d'une tablette, reliée au micro-ordinateur par une liaison 5, filaire ou autre.

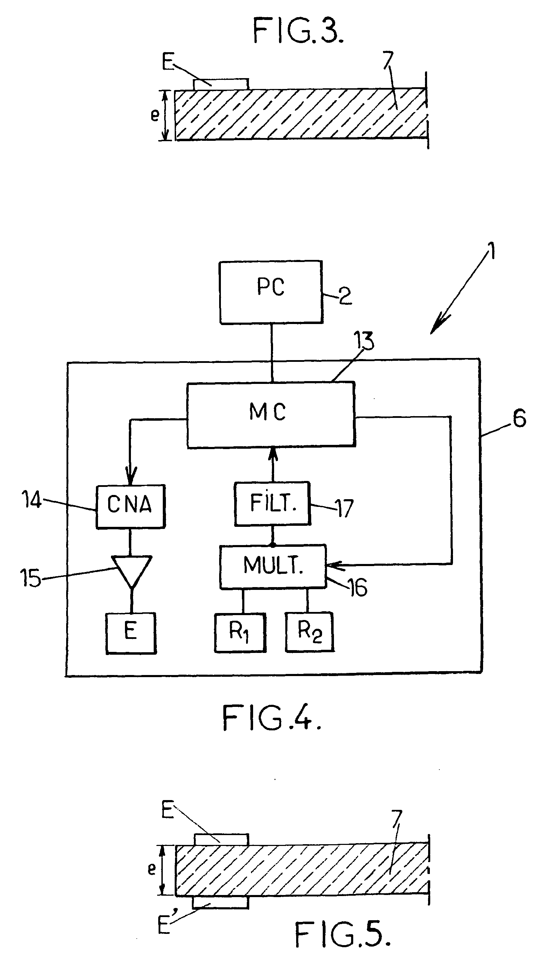

L'interface tactile 6 comporte un objet solide résonant pour les ondes mécaniques élastiques, par exemple une plaque 7 relativement mince, qui peut notamment être réalisée en verre, ou en métal, matière plastique, céramique ou autre. La plaque 7 peut être réalisée en un matériau homogène ou non, isotrope ou non, éventuellement multicouches.
La plaque 7 peut éventuellement présenter une forme sensiblement rectangulaire de dimensions L sur 1 (voir figure 2) définissant un axe des abscisses x et un axe des ordonnées y. Les dimensions de la plaque 7 peuvent être choisies en fonction de l'application envisagée : par exemple, la plaque 7 peut être au format A4, ou plus petite (on peut envisager une plaque 7 de quelques centimètres de côté), ou plus grande (par exemple, 1=300 mm et L=400 mm).
La plaque 7 présente une épaisseur e (voir figure 4) qui peut être de relativement faible épaisseur, par exemple de 1 à 5 mm, notamment de l'ordre de 4,5 mm dans le cas d'une plaque de verre de format A4.
Comme représenté sur la figure 1, la plaque 1 peut éventuellement être entourée d'un cadre 8 en matière plastique ou autre qui peut également recouvrir la face inférieure de la plaque 7, seule la face supérieure de la face 7 étant laissée libre et formant une surface tactile dans l'exemple particulier représenté.
Dans l'exemple des figures 1 à 3, la plaque comporte en outre des transducteurs piézoacoustiques E, R1, R2 qui peuvent être fixés sur la face supérieure tactile de ladite plaque 7 (ou le cas échéant sur sa face inférieure).

Les transducteurs piézoacoustiques comprennent ici :

- un transducteur d'émission E qui sert à émettre des ondes mécaniques élastiques (c'est-à-dire des ondes acoustiques au sens large du terme), notamment des ondes de Lamb, de façon à établir des régimes de résonance dans la plaque 7,
- et deux transducteurs de réception R1, R2 qui servent à capter des signaux représentatifs desdites ondes mécaniques.

Les transducteurs E, R1, R2 sont de préférence disposés en dehors de tout axe de symétrie de la plaque 7. Dans l'exemple représenté :

- le transducteur d'émission E peut être disposé sur un côté de la plaque de longueur 1 et matérialisant l'axe y, en un point d'émission d'abscisse x=0 et d'ordonnée y= 3 1/4,
- le premier transducteur de réception R1 peut être disposé sur un côté de longueur L matérialisant l'axe x, adjacent au côté qui comporte le transducteur E, en un premier point de réception d'abscisse x=2L/3 et d'ordonnée y=0,
- et le deuxième transducteur de réception R2 peut être disposé sur le coin opposé à l'origine O des abscisses et des ordonnées, en une deuxième point de réception d'abscisse x=L et d'ordonnée y=1.

Pour une plaque de dimensions 300 mm x 400 mm x 4,5 mm, les transducteurs E, R1, R2 peuvent avoir par exemple une taille d'environ 1,5 cm$^2$. Le signal d'excitation délivré au transducteur d'émission E peut être par exemple de 1 Vpp, et les signaux de réception captés par les transducteurs de réception R1, R2 peuvent atteindre 0,4 Vpp et ne nécessitent aucune amplification.

Les transducteurs peuvent être des pastilles piézoélectriques de faible coût de type « buzzer », par exemple montés sur disques de laiton, ou des transducteurs en céramique ferroélectrique. Ils peuvent être par exemple collés sur la plaque 7, notamment au moyen d'une colle. Ils sont collés sur la plaque au moyen d'une colle rigide type époxy à 2 composants à prise rapide ou « Cyanolit » à prise ultra rapide.

Les transducteurs piézoélectriques peuvent le cas échéant être remplacés par des transducteurs magnétostrictifs.

La plaque 7 peut être fixée au cadre 8 préférentiellement en des noeuds de vibration des modes propres des ondes mécaniques dans ladite plaque.

Comme représenté schématiquement sur la figure 1, les transducteurs E, R1, R2 permettent de localiser un toucher sur la surface tactile de la plaque 7, par exemple lorsqu'un utilisateur touche la surface tactile avec son doigt 9, ou avec un stylet ou autre. Par exemple, si l'utilisateur décrit une certaine trajectoire 10 avec son doigt 9 sur la surface tactile de la plaque 7, chaque point de cette trajectoire peut être localisé par l'interface tactile 6 et retransmis au micro-ordinateur 2 qui peut ainsi déplacer un curseur 11 sur l'écran 3 en suivant une trajectoire 12 qui est l'image de la trajectoire 10 susmentionnée. De plus, si un toucher de faible durée sur la surface tactile est identifié, ce toucher peut être interprété par exemple comme signifiant une sélection d'un objet (comme un « clic » d'une souris ou interface tactile habituellement utilisée). De même, un double toucher rapide en une même zone de la surface tactile peut être interprété comme signifiant un lancement d'une action (comme un « double clic » d'une souris ou d'une interface tactile habituellement utilisée).

La surface tactile de la plaque 7 peut également être utilisée pour constituer un clavier tactile programmable.

Comme représenté sur la figure 4, l'interface tactile 6 peut comporter un microcontrôleur 13 (MC), doté par exemple d'une unité arithmétique et logique. Ce microcontrôleur peut comporter une sortie reliée à un convertisseur numérique - analogique 14 (CNA), dont la sortie est reliée par un amplificateur 15 au transducteur d'émission E.

Par ailleurs, les deux transducteurs de réception R1, R2 peuvent être reliés par un multiplexeur 16 (MULT.) à l'entrée d'un filtre passe-bande 17. Le multiplexeur est piloté par le microcontrôleur 13. Le filtre passe-bande 17 peut présenter par exemple une bande passante de 10 à 100 kHz, préférentiellement de 15 à 70 kHz. La sortie du filtre passe-bande 17 est reliée à une entrée analogique du microcontrôleur 13 (si ce microcontrôleur possède un convertisseur analogique-numérique intégré ; sinon, la sortie du filtre 17 est reliée à une entrée numérique du microcontrôleur par l'intermédiaire d'un convertisseur analogique-numérique). Le convertisseur analogique-numérique (intégré ou non au microcontrôleur 13) est adapté pour effectuer un échantillonnage des signaux captés sur au moins 8 bits, préférentiellement sur 10 bits, voire sur 12 bits ou plus.

Les liaisons vers les transducteurs E, R1, R2 peuvent être constituées notamment par des câbles coaxiaux de type audio ou par toute autre liaison blindée.

Le dispositif qui vient d'être décrit fonctionne comme suit : à intervalle régulier, par exemple à une cadence de plusieurs dizaines de mesures par seconde, par exemple 50 à 100 mesures par seconde, le microcontrôleur 13 lance une étape de surveillance de la surface tactile de la plaque 7 suivie par une étape de localisation au cours de laquelle on identifie et on localise un éventuel toucher sur ladite surface tactile.

**a) Etape de surveillance**

Au cours de chaque étape de surveillance, le microcontrôleur 13 fait émettre par le transducteur d'émission E des ondes mécaniques élastiques, notamment des ondes de Lamb et plus particulièrement des ondes de Lamb de flexion. Ces ondes génèrent des phénomènes de résonance dans la plaque 7 et sont captées par les transducteurs de réception R1, R2. Au cours de l'étape de localisation qui suit chaque étape de surveillance, on extrait certaines caractéristiques des signaux mesurés par les transducteurs de réception R1, R2 (notamment l'amplitude et/ou la phase de ces signaux) à un nombre N de fréquences prédéterminées, qui sont des fréquences propres de la plaque 7. Le nombre N desdites fréquences prédéterminées est généralement supérieur à 10 et peut par exemple être de l'ordre de 20 à 40. Au moins certaines (voire la totalité) desdites fréquences prédéterminées en question peuvent avantageusement correspondre à des modes antisymétriques A0.

Les fréquences prédéterminées susmentionnées sont généralement choisies à l'avance parmi les fréquences propres de la plaque 7, une fois pour toutes, à partir du spectre des signaux captés par les transducteurs de réception R1, R2, selon les critères suivants :

- lesdites fréquences prédéterminées sont telles que le spectre du signal reçu présente, auxdites fréquences prédéterminées, une amplitude supérieure à une valeur seuil (on peut par exemple sélectionner en pratique des fréquences propres correspondant à des facteurs de qualité supérieurs à 20) ;
- lesdites fréquences prédéterminées sont bien isolées et séparées deux à deux par un écart supérieur à un écart minimum prédéterminé (ledit écart minimum prédéterminé peut par exemple être au moins égal à 150 Hz, de préférence supérieur à 200 Hz et de façon encore plus préférée supérieur à 300 Hz (les fréquences prédéterminées doivent de préférence être distantes d'au moins trois fois la largeur de bande à mi hauteur des raies, soit en pratique généralement de 300 à 500 Hz) ;
- lesdites fréquences prédéterminées sont réparties sur la plage de fréquences surveillée (par exemple 10 à 100 kHz, préférentiellement 15 à 70 kHz, comme expliqué ci-dessus) : à titre d'exemple, on peut s'assurer qu'au moins une desdites fréquences prédéterminées est inférieure à 30 kHz et qu'au moins une desdites fréquences prédéterminées est supérieure à 50 kHz ;
- les fréquences prédéterminées doivent de préférence correspondre à des modes propres correspondant à des fréquences spatiales basses pour certains modes propres et hautes pour d'autres : en effet, les modes présentant des hautes fréquences spatiales sont souvent complexes et permettent d'obtenir une bonne résolution, mais sont souvent caractérisés par un haut degré de symétrie, c'est à dire que plusieurs touchers en des endroits différents peuvent correspondre aux mêmes coefficients d'absorption, tandis que les modes présentant des basses fréquences spatiales ont des figures plus simples, et permettent de lever les problèmes de symétrie, la combinaison des deux permettant de véritablement optimiser la localisation du toucher.

On notera que le choix des fréquences prédéterminées susmentionnées peut être effectué expérimentalement sur chaque plaque 7, ou plus avantageusement sur chaque type de plaque 7 puis repris d'office pour toutes les plaques 7 du même type (un type de plaque 7 correspondant aux plaques de mêmes dimensions et de même matériau).

Plusieurs méthodes sont utilisables pour effectuer cette surveillance aux N fréquences prédéterminées susmentionnées.

Selon une première méthode avantageuse, le microcontrôleur 13 peut faire émettre par le transducteur E, une trame comprenant N formes d'ondes superposées aux N fréquences prédéterminées (lesdites N formes d'ondes peuvent par exemple être choisies parmi des formes d'onde sinusoïdales et des formes d'onde carrées). Cette émission peut être effectuée pendant une fenêtre temporelle d'émission de durée suffisante pour que des résonances se construisent dans la plaque 7. Cette durée peut par exemple être comprise entre 10 et 25 ms, et notamment être de l'ordre de 16 ms.

Au cours de l'étape de surveillance, les ondes mécaniques peuvent être captées par les transducteurs de réception R1, R2 pendant une fenêtre temporelle de réception qui est incluse (ou au moins recouvre) dans la fenêtre temporelle d'émission mais peut débuter après celle-ci de façon à laisser les résonances se construire dans la plaque 7 avant le début de ladite fenêtre temporelle de réception. La fenêtre temporelle de réception peut présenter une durée comprise entre 5 et 15 ms ; elle peut par exemple être de l'ordre de 10 ms et débuter environ 6 ms après la fenêtre temporelle d'émission.

En variante, la fenêtre temporelle de réception pourrait suivre la fenêtre temporelle d'émission sans la recouvrir : dans ce cas, on pourrait éventuellement n'utiliser qu'un seul transducteur E servant à la fois en émission et en réception.

Selon une autre variante, on peut faire émettre par le transducteur d'émission E des ondes mécaniques générées par un signal impulsionnel (par exemple un signal en forme de créneau de largeur inférieur à une demi-période de la fréquence propre la plus élevée), puis on fait capter lesdites ondes mécaniques (par le ou les transducteurs de réception R1, R2 ou le cas échéant par le même transducteur E) pendant une fenêtre temporelle de réception ayant une durée comprise entre 5 et 15 ms.

Selon une forme de réalisation de l'invention, à partir des signaux captés par les transducteurs de réception R1, R2 et échantillonnés, on peut extraire par exemple les amplitudes des signaux captés auxdites fréquences prédéterminées (par transformée de Fourrier ou par détection synchrone numérique), soit $r_{im}$, i étant un indice entre 1 et N qui désigne la fréquence prédéterminée et m étant un indice ici compris entre 1 et 2 qui désigne le transducteur de réception R1, R2. On notera que l'on peut pondérer les formes d'ondes à l'émission en fonction des fréquences pour égaliser les amplitudes des signaux captés auxdites fréquences prédéterminées en l'absence de toucher sur la surface tactile.

On extrait également la phase des signaux captés par les transducteurs de réception R1, R2 auxdites fréquences prédéterminées, soit $\varphi_{im}$, i étant un indice entre 1 et N qui désigne la fréquence prédéterminée et m étant un indice ici compris entre 1 et 2 qui désigne le transducteur de réception R1, R2.

Ces extractions de données, ainsi que les calculs qui suivent, peuvent être effectués par le microcontrôleur 13 s'il dispose d'une unité arithmétique et logique, ou sinon par l'ordinateur 2.

A partir de ces données, on calcule pour chaque transducteur un vecteur complexe d'absorption Arel :

$Arel = [Arel_n]$, où :

- n=i+N. (m-1) est un entier compris entre 1 et 2N dans l'exemple considéré ici car M = 2 (n serait compris entre 1 et N pour un seul transducteur de réception avec M=1),
- $Arel_n = (r_{im} \ / \ r0_{im} \ )e^{j(\varphi im - \varphi 0 im)}$,
- $r0_{im}$ est une valeur d'amplitude correspondant à la fréquence propre i et au transducteur de réception m en l'absence de toucher sur la surface tactile, déterminée au préalable et une fois pour toutes dans une étape initiale d'apprentissage qui sera décrite plus loin,
- $\varphi 0_{im}$ est une valeur de phase correspondant à la fréquence propre i et au transducteur de réception m en l'absence de toucher sur la surface tactile, déterminée au préalable et une fois pour toutes dans l'étape initiale d'apprentissage.

On notera que les $r0_{im}$ et $\varphi 0_{im}$ pourraient éventuellement être corrigées automatiquement de variations prévisibles dues par exemple aux conditions ambiantes de température ou au vieillissement.

A partir du vecteur d'absorption relatif Arel, on calcule un vecteur d'absorption relatif centré $Ac=[Ac_n]=$

$[Arel_n - \langle Arel \rangle]$ et n=i+N(m-1), $\langle Arel \rangle = \dfrac{\sum\limits_{n=1}^{M.N} Arel_n}{N.M}$ ,

N est le nombre de fréquences prédéterminées prises en compte et M le nombre de transducteurs de réception (ici M=2).

On normalise ensuite le vecteur d'absorption relatif centré pour obtenir un vecteur d'absorption relatif centré normalisé

$$Anor \ = \left[ \dfrac{Ac_n}{\sqrt{\sum\limits_{n=1}^{M.N}\left(Arel_n - \langle Arel \rangle\right)^2}} \right] \quad \text{qui est uti-}$$

lisé pour détecter et localiser un toucher sur la surface tactile, au moyen de matrices de référence obtenues au cours de l'étape initiale d'apprentissage susmentionnée.

Par ailleurs, on peut utiliser le module du vecteur d'absorption relatif Arel pour détecter un toucher selon un critère de seuil et/ou de variation dans le temps (pour la définition d'un clic, d'un double clic etc.). Le module du vecteur d'absorption relatif Arel est égal à :

$$|A_{rel}| = \dfrac{\sqrt{\sum\limits_{n=1}^{M.N}\left(|Arel_n| - 1\right)^2}}{\sqrt{M.N}} \ .$$

Si le module du vecteur d'absorption relatif est supérieur à une valeur seuil prédéterminée ou si l'évolution de ce module au cours du temps correspond à un profil dynamique particulier (par exemple une augmentation suivie d'une diminution rapide), le microcontrôleur 13 détermine qu'un toucher est intervenu sur la surface tactile et procède ensuite à l'étape de localisation. Sinon, une nouvelle étape d'observation est lancée, après un intervalle de temps prédéterminé.

**a0) Etape initiale d'apprentissage**

Avant toute utilisation de l'interface tactile 6, on réalise une étape initiale d'apprentissage qui peut être conduite soit pour chaque interface tactile 6 individuelle, soit pour chaque type d'interface tactile 6.

Cette étape initiale d'apprentissage est réalisée comme l'étape d'observation décrite ci-dessus, mais dans des conditions prédéterminées permettant d'obtenir certaines valeurs de références utilisées ensuite dans les étapes d'observation et de localisation pendant l'utilisation normale du dispositif.

Au cours de cette étape initiale d'apprentissage, on peut notamment déterminer les valeurs $r0_{im}$ et $\varphi 0_{im}$ susmentionnées à partir des signaux captés par les transducteurs R1, R2 en l'absence de toucher sur la surface tactile de la plaque 7, de la même façon que l'on détermine les valeurs $r_{im}$ et $\varphi_{im}$ (voir l'étape d'observation ci-dessus). Ces valeurs $r0_{im}$ et $\varphi 0_{im}$ sont ensuite utilisées au cours de chaque étape d'observation, comme expliqué ci-dessus.

Par ailleurs, au cours de l'étape initiale d'apprentissage, on calcule également des matrices d'ab-

sorption de référence $A_k ref = [A_k ref_n(x_1, y_n)]$, utilisées ensuite au cours des étapes d'observation. Les termes $A_k ref_n(x_t, y_u)$ de chaque matrice d'absorption de référence correspondent aux composantes des vecteurs d'absorption relatifs centrés normalisés, déterminés comme expliqué ci-dessus (voir l'étape d'observation) pour des touchers en des points prédéterminés de coordonnées $(x_t, y_u)$ échantillonnés sur la surface tactile, t et u étant des indices relatifs à la position du toucher et k étant un indice relatif à la dimension caractéristique du toucher.

La dimension caractéristique en question est représentative de la surface de contact entre la surface tactile et l'objet ou le doigt touchant la surface tactile.

La fréquence spatiale d'échantillonnage doit être suffisamment élevée et généralement au moins égale au double de la limite haute du spectre de fréquences spatiales observées pour les modes de résonance retenus. Un pas d'échantillonnage de 3 mm selon les axes x et y pourra par exemple être choisi.

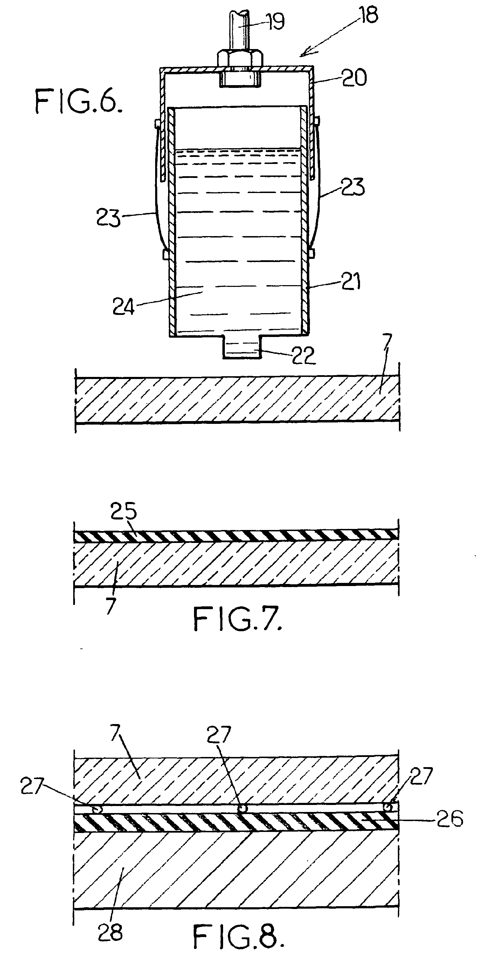

Les matrices d'absorption de référence peuvent être obtenues en utilisant par exemple un doigt étalon 18 tel que celui représenté sur la figure 6, porté par un bras robotisé 19 qui applique successivement le doigt étalon 18 aux différents points de coordonnées $(x_u, y_t)$ sur la surface tactile. Dans l'exemple particulier de la figure 6, le doigt étalon 18 peut comporter un support 20 sur lequel peut coulisser verticalement un réservoir principal de polyuréthane 21 moulé au fond en forme de patin de contact 22 circulaire ou rectangulaire destiné à venir en contact avec la surface tactile de la plaque 7. Le réservoir 21 est relié au support 20 par des liaisons élastiques 23 (par exemple des liens en caoutchouc) et il contient par exemple une masse prédéterminée 24 de résine silicone (par exemple de l'ordre de 20 g). Lorsque le doigt étalon 18 est déposé sur la surface tactile toujours à même vitesse, avec un même tampon de contact 22 et avec la même course relative entre le support 20 et le réservoir 21, le tampon de contact produit toujours le même contact avec la surface tactile. On utilise des tampons de contact 22 de surfaces différentes pour les différentes valeurs de k. Par exemple, on peut utiliser des tampons de contact circulaires de diamètres 3 mm, 5 mm, 7 mm, 10 mm, 15 mm (mais la forme du tampon de contact 22 pourrait être non circulaire, par exemple ovale ou carrée). Au moins une des valeurs de l'indice k doit de préférence correspondre à un tampon de contact de petite taille, avec une dimension caractéristique idéalement deux fois plus petite que la fréquence spatiale la plus élevée observée sur la surface tactile pour un motif de résonance). De cette manière, il est possible ensuite de déterminer la surface couverte par des doigts de plus grande taille en appliquant une moyenne mobile sur plusieurs éléments de la matrice correspondant à l'aire de contact.

On notera qu'il serait éventuellement possible de n'utiliser qu'une seule matrice de référence en faisant abstraction de l'aire de contact du toucher, notamment si les touchers sont normalisés (par exemple si les touchers sont réalisés à l'aide d'un stylet).

**b) Etape de localisation**

Après chaque étape de surveillance, le microcontrôleur 13 (ou éventuellement le micro-ordinateur 2) lance une étape de localisation, permettant de localiser un éventuel toucher sur la surface tactile de la plaque 7, en comparant au moins certaines caractéristiques du signal capté à une bibliothèque de caractéristiques de référence, lesdites caractéristiques de référence correspondant respectivement à des touchers en des zones prédéterminées de ladite surface tactile. Dans l'exemple considéré ici, les valeurs de référence en question sont les matrices de référence explicitées ci-dessus.

Ces matrices de référence sont utilisées à chaque étape de localisation pour calculer une fonction de corrélation croisée entre :

- le vecteur d'absorption réduit, centré et normalisé Anor déterminé au cours de l'étape de localisation en cours,
- et chacun des éléments $A_k ref_n(x_t, y_u)$ d'une des matrices de référence (ou de la matrice de référence si l'on utilise qu'une seule matrice de référence).

Le choix de la bonne matrice de référence $A_k$ $(x_i, y_i)$, c'est à dire de l'indice k correspondant à la taille du doigt étalon approprié est déduit du module du vecteur d'absorption relatif $A_{rel}$.

A cet effet, on détermine à l'avance, pour un même type d'objet, quelles sont les fréquences propres pour lesquelles l'absorption varie le plus en fonction de l'aire de contact du toucher. Par exemple, pour une plaque de verre de 200 mm x 141 mm x 1 mm, on observe que les raies situées entre 25 kHz et 35 kHz varient davantage (quasiment proportionnellement) avec l'aire de contact du toucher. On extrait alors du vecteur d'absorption relative $A_{rel}$ un sous vecteur $A_{relx}$, correspondant aux raies de résonance les plus sensibles à l'aire de contact du toucher, et on calcule le module de ce sous vecteur $A_{relx}$. La valeur de ce module donne, en fonction d'une table de correspondance, la matrice de référence k à utiliser pour effectuer l'opération de corrélation croisée et en déduire la position du toucher.

Pour le choix des fréquences propres correspondant au sous vecteur susmentionné, on peut éventuellement n'utiliser que des fréquences propres caractérisées par un coefficient $Arel_n$ inférieur à 1 en module et ayant une variation sur la plaque inférieure à une valeur seuil, par exemple 4% [ce qui signifie que le module du sous-vecteur d'absorption $A_{relx}$ varie de moins de 4 % par rapport à une valeur moyenne sur l'ensemble de la plaque]. Dans ce cas, bien que le module du sous vecteur d'absorption relatif $A_{relx}$ soit plus faible en moyenne sur la plaque, il est cependant plus uniforme sur la plaque avec un écart type plus faible, ce qui rend la mesure de surface couvrante plus fiable. Ceci constitue un quatrième critère de sélection des fréquences propres. Le module du vecteur d'absorption relatif extrait est alors une fonction monotone croissante de la surface couvrante :

$$\left\{ \left| A_{relx}(x,y) \right| = \frac{\sqrt{\sum_{i=1}^{p} \left( \left| Arel_i(x,y) \right| - 1 \right)^2}}{\sqrt{p}} \right\},$$
$$0 < 1 - \left| Arel_i(x,y) \right| < 4\%$$

où $p \leq N$ est le nombre de fréquences propres utilisées pour constituer le vecteur $A_{relx}$.

Une fois déterminée la matrice de référence k adéquate et après l'étape de corrélation croisée susmentionnée, la position du toucher sur la surface tactile est déterminée et transmise au micro-ordinateur 2 qui positionne en conséquence le pointeur 11 à l'écran, ou qui enregistre la frappe d'un caractère si la tablette 6 est utilisée comme un clavier.

On notera que l'objet comprenant la surface tactile et équipé du ou des transducteurs E, R1, R2, pourrait être :

- l'écran 3 du micro-ordinateur 2,
- un écran de téléphone mobile, d'agenda électronique, de terminal de paiement,
- un écran LCD, plasma, DLP, FED, SED, OLED, etc.,
- une feuille métallique ou plastique relativement souple, utilisables comme interface sensorielle en robotique ou comme clavier avec touches tactiles programmables,
- une vitre ou autre surface dans un magasin, un musée, une galerie d'art ou autre, pour permettre aux clients ou aux visiteurs de se faire présenter des détails sur un écran ou au moyen d'un haut parleur concernant les produits ou les oeuvres exposés,
- une vitre ou autre surface d'un panneau d'affichage permettant aux passants de se faire présenter par exemple des détails sur les publicités en cours d'affichage, ou encore de se faire présenter des informations générales concernant une commune ou un autre lieu (par exemples, des actualités ou des informations pratiques, par exemple un plan du lieu), ou autres, ces détails ou informations étant présentés par exemple sur un écran visible en partie inférieure du panneau d'affichage,
- une partie de mur, du sol, ou de tout autre objet utilisée par exemple pour commander des systèmes domotiques (on peut ainsi notamment permettre aux habitants d'un appartement de déterminer eux-mêmes les emplacements des interrupteurs, constitués simplement par les zones actives 10 susmentionnées, positionnées sur les murs ou autres aux endroits souhaités),
- une partie de mur, du sol, ou de tout autre objet utilisée pour commander des machines industrielles notamment en milieu hostile (lieux contenant des explosifs, lieux à température élevée, lieux à radioactivité élevée, etc.),
- une surface lisse et facile d'entretien pour constituer un clavier d'entrée d'un objet domestique tel que réfrigérateur, machine à laver ou autres, ou d'un objet à vocation industrielle ou militaire,
- un panneau de porte d'immeuble utilisé comme interface d'entrée, constituant par exemple un clavier virtuel de digicode,
- une partie du sol utilisée pour localiser la position d'une personne marchant dessus,
- une partie d'une automobile ou autre véhicule formant interface d'entrée.

Parmi les avantages de l'invention, on peut noter le faible rapport coût/performance, la faible consommation, l'immunité aux variations de température, la tolérance aux formes de l'objet résonnant, et la haute précision de localisation, qui peut être millimétrique.

Selon une variante de l'invention, comme représenté sur la figure 5, chaque point d'émission ou de réception pourrait comporter deux transducteurs (par exemple les transducteurs E et E' pour le point d'émission sur la figure 7) montés en vis-à-vis de part et d'autre de la plaque 7. Ce montage permet de réaliser une émission/réception sélective des modes :

- si les transducteurs (par exemple E, E') de chaque paire sont connectés en parallèle, on sélectionne le mode symétrique S0 en émission et réception (les transducteurs de réception sont montés de façon similaire aux transducteurs d'émission E, E'),
- si les transducteurs de chaque paire sont connectés en antiparallèle, on sélectionne le mode antisymétrique A0 en émission et réception.

Selon une autre variante, représentée sur la figure 7, la plaque 7 peut être recouverte par un film plastique souple 25 en contact sec avec la face supérieure de ladite plaque 7, au niveau de la surface tactile. Le film 25 est absorbant pour les ondes élastiques, et qui permet d'obtenir une plus forte absorption lors d'un toucher sur la surface tactile, notamment lors d'un toucher par un objet fin tel qu'un stylet. Le film 25 peut avantageusement être en contact sec avec la plaque 7, sans y être intimement lié par adhésif, c'est à dire emprisonnant une fine couche d'air dans les rugosités de l'interface. La fonction d'absorption est alors assurée par le film 25 lorsqu'il est localement pressé contre la plaque et non plus par la pulpe du doigt ou la pointe d'un stylet appliqué contre le film 25.

Comme représenté sur la figure 8, un film plastique souple absorbant 26, similaire au film 25 susmentionné, peut être interposé entre :

- la plaque 7, qui présente dans ce cas une certaine souplesse,

- et un substrat rigide 28.

Des entretoises 27 de faible dimensions (micro billes ou autres) peuvent être interposées entre la plaque 7 et le film 26, de sorte que la plaque 7 vienne en contact avec le film 26 uniquement au niveau de l'emplacement du toucher d'un stylet ou d'un doigt ou autre sur la plaque 7. L'absorption des ondes élastiques est alors faite par le film 26 au niveau du toucher.

Eventuellement, la plaque 7 peut alors être constituée par la plaque supérieure d'un écran LCD, le film absorbant 26 étant le cristal liquide lui-même de l'écran LCD.

## Revendications

1. Procédé pour localiser un toucher sur une surface tactile appartenant à un objet (7), ce procédé comprenant au moins les étapes suivantes :

   (a) une étape de surveillance au cours de laquelle on fait propager dans l'objet des ondes mécaniques élastiques à partir d'au moins un point d'émission (E) appartenant à l'objet, et on capte lesdites ondes mécaniques en au moins un point de réception (R1, R2) appartenant à l'objet pour obtenir au moins un signal capté,
   (b) et une étape de localisation au cours de laquelle on localise un toucher sur ladite surface tactile en analysant le signal capté,

   **caractérisé en ce que** lesdites ondes mécaniques élastiques émises comportent au moins deux composantes fréquentielles correspondant à au moins deux fréquences propres vibratoires de l'objet (7) de manière à établir des régimes de résonance, et **en ce qu'**au cours de l'étape de localisation, on compare au moins certaines caractéristiques du signal capté à une bibliothèque de caractéristiques de référence, lesdites caractéristiques de référence correspondant respectivement à des touchers en des zones prédéterminées de ladite surface tactile.

2. Procédé selon la revendication 1, dans lequel lesdites caractéristiques du signal capté utilisées lors de l'étape de localisation comprennent au moins une amplitude du signal ou au moins une phase du signal.

3. Procédé selon l'une quelconque des revendications précédentes, dans lequel lesdites caractéristiques du signal capté utilisées lors de l'étape de localisation correspondent à un nombre N de fréquences prédéterminées, N étant un entier au moins égal à 2, de préférence au moins égal à 10, lesdites fréquences prédéterminées étant des fréquences propres de l'objet, excitées par lesdites ondes mécaniques et dans lequel lesdites fréquences prédéterminées sont telles que le spectre du signal reçu présente, auxdites fréquences prédéterminées, une amplitude supérieure à une valeur seuil.

4. Procédé selon l'une quelconque des revendications 3, dans lequel lesdites fréquences prédéterminées sont séparées deux à deux par un écart supérieur à un écart minimum prédéterminé au moins égal à 150 Hz, de préférence supérieur à 200 Hz et de façon encore plus préférée supérieur à 300 Hz et dans lequel lesdites fréquences prédéterminées sont distribuées dans une plage allant de 10 à 100 kHz, préférentiellement de 15 à 70 kHz, une desdites fréquences prédéterminées étant inférieure à 30 kHz et au moins une desdites fréquences prédéterminées étant supérieure à 50 kHz.

5. Procédé selon l'une quelconque des revendications précédentes, dans lequel lesdites ondes mécaniques sont des ondes de Lamb, lesdites ondes de Lamb étant des ondes de flexion antisymétriques A0.

6. Procédé selon l'une quelconque des revendications précédentes, dans lequel l'étape de surveillance est répétée à une cadence de plusieurs dizaines de fois par seconde, de préférence au moins égale à 50 fois par seconde.

7. Procédé selon l'une quelconque des revendications 3 à 4, dans lequel au cours de l'étape de surveillance, on émet au moins une forme d'onde à au moins une desdites fréquences prédéterminées, pendant une fenêtre temporelle d'émission de durée comprise entre 10 et 25 ms pour que des résonances se construisent dans ledit objet (7), ladite forme d'onde comprenant N formes d'ondes superposées aux N fréquences prédéterminées et dans lequel au cours de l'étape de surveillance, les ondes mécaniques sont captées pendant une fenêtre temporelle de réception ayant une durée comprise entre 5 et 15 ms.

8. Procédé selon la revendication 7, dans lequel la fenêtre temporelle de réception recouvre au moins partiellement la fenêtre temporelle d'émission, ledit au moins un point de réception étant distinct dudit au moins un point d'émission.

9. Procédé selon la revendication 7, dans lequel la fenêtre temporelle de réception suit la fenêtre temporelle d'émission sans la recouvrir et dans lequel au cours de l'étape de surveillance, on utilise un unique point d'émission, confondu avec le point de réception.

10. Procédé selon l'une quelconque des revendications 1 à 5, dans lequel au cours de l'étape de surveillance, on émet depuis le point d'émission des ondes mécaniques générées par un signal impulsionnel, puis on capte lesdites ondes mécaniques pendant une fenêtre temporelle de réception ayant une durée comprise entre 5 et 15 ms.

11. Procédé selon l'une quelconque des revendications précédentes, dans lequel au cours de l'étape de surveillance, on détermine un vecteur d'absorption relative *Arel* = [*Arel$_n$*] des ondes acoustiques en module et en phase aux N fréquences prédéterminées, où :

- *Arel$_n$* = $(r_{im}/r0_{im})e^{j(\varphi im - \varphi 0 im)}$,
- i est un indice compris entre 1 et N désignant la fréquence prédéterminée,
- m est un indice compris entre 1 et M désignant le point de réception,
- n=i+N(m-1),
- $r0_{im}$ est une valeur d'amplitude correspondant à la fréquence prédéterminée i et au point de réception m en l'absence de toucher sur la surface tactile,
- $r_{im}$ est une valeur d'amplitude correspondant à la fréquence prédéterminée i et au point de réception m en présence de toucher sur la surface tactile,
- $\varphi 0_{im}$ est une valeur de phase correspondant à la fréquence prédéterminée i et au point de réception m en l'absence de toucher sur la surface tactile.
- $\varphi_{im}$ est une valeur de phase correspondant à la fréquence prédéterminée i et au point de réception m en présence de toucher sur la surface tactile.

12. Procédé selon la revendication 11, dans lequel au cours de l'étape de surveillance, on détermine un vecteur d'absorption relatif centré normalisé

$$Anor = \left[ \frac{Ac_n}{\sqrt{\sum_{n=1}^{M.N}(Arel_n - \langle Arel \rangle)^2}} \right], \text{ avec } Ac=$$

$[Ac_n]=[Arel_n - \langle Arel \rangle]$ et $\langle Arel \rangle = \dfrac{\sum_{n=1}^{M.N} Arel_n}{N.M}$ .

et dans lequel au cours de l'étape de localisation, on déduit la position du toucher d'un test de corrélation croisée entre un vecteur d'absorption lié au vecteur d'absorption relative A$_{rel}$ et au moins une matrice de référence constituée par un ensemble de vecteurs d'absorption de référence A$_{ref}$(x$_t$,y$_u$) correspondant à des touchers en des points prédéterminés de coordonnées (x$_t$,y$_u$) échantillonnés sur la surface tactile de l'objet.

13. Procédé selon la revendication 12, dans lequel au cours de l'étape de localisation, on déduit la position du toucher d'un test de corrélation croisée entre un vecteur d'absorption relatif centré A$_{nor}$ et au moins une matrice de référence constituée par un ensemble de vecteurs d'absorption relatifs centrés normalisés de référence A$_{ref}$(x$_t$,y$_u$) correspondant à des touchers en des points prédéterminés de coordonnées (x$_t$,y$_u$) échantillonnés sur la surface tactile de l'objet et dans lequel au cours de l'étape de localisation, on utilise plusieurs matrices de référence correspondant à plusieurs étendues de toucher, on déduit une étendue du toucher à partir du vecteur d'absorption relatif A$_{rel}$ pour déterminer la matrice de référence à utiliser.

14. Procédé selon la revendication 13, dans lequel au cours de l'étape de localisation, on extrait du vecteur d'absorption relative A$_{rel}$ un sous vecteur A$_{relx}$, correspondant aux fréquences prédéterminées les plus sensibles à l'étendue du toucher, et on calcule le module de ce sous vecteur A$_{relx}$, puis on en déduit la matrice de référence à utiliser pour effectuer l'opération de corrélation croisée et en déduire la position du toucher, et dans lequel pour constituer le sous vecteur A$_{relx}$, on ne retient que les fréquences prédéterminées pour lesquelles les composantes du vecteur d'absorption relative ont un module inférieur à 1 et ayant une variation sur la plaque inférieure à une valeur seuil.

15. Procédé selon la revendication 13, dans lequel la matrice de référence est constituée par un ensemble de vecteurs d'absorption de référence A$_{ref}$(x$_t$,y$_u$) correspondant à des touchers en des points prédéterminés de coordonnées (x$_t$,y$_u$) échantillonnés sur la surface tactile de l'objet avec un pas inférieur à la demi-longueur d'onde de la fréquence spatiale la plus petite du spectre d'excitation.

16. Procédé selon la revendication 12, dans lequel au cours de l'étape d'observation, on calcule un module du vecteur d'absorption relatif et on compare ce module à une valeur seuil prédéterminée pour déterminer si un toucher est intervenu sur la surface tactile ou on compare ce module au cours du temps à un profil dynamique particulier pour déterminer si un toucher est intervenu sur la surface tactile.

17. **Dispositif** pour localiser un toucher sur une surface tactile appartenant à un objet (7), ce dispositif comportant au moins un transducteur (E, R1, R2) adapté pour émettre et capter des ondes mécaniques élastiques dans l'objet, ledit transducteur étant relié au

moins une unité centrale électronique (2, 13) adaptée pour :

- faire propager dans l'objet des ondes mécaniques par ledit au moins un transducteur, et faire capter lesdites ondes mécaniques par ledit au moins un transducteur,
- et localiser un toucher sur ladite surface tactile en analysant le signal capté,

**caractérisé en ce que** lesdites ondes mécaniques élastiques émises comportent au moins deux composantes fréquentielles correspondant à au moins deux fréquences propres vibratoires de l'objet (7) de manière à établir des régimes de résonance, et **en ce que** ladite unité centrale électronique (2, 13) est adaptée pour comparer au moins certaines caractéristiques du signal capté à une bibliothèque de caractéristiques de référence, lesdites caractéristiques de référence correspondant respectivement à des touchers en des zones prédéterminées de ladite surface tactile.

**18.** Dispositif selon la revendication 17, constituant un clavier tactile, et dans lequel l'objet comporte une plaque (7) qui inclut ladite surface tactile.

**19.** Dispositif selon la revendication 17, adapté pour déplacer continûment un pointeur sur un écran d'affichage.

**20.** Dispositif selon l'une quelconque des revendications 17 à 19, dans lequel ledit au moins un transducteur (E, R1, R2) est disposé en dehors de tout axe de symétrie de l'objet (7).

**21.** Dispositif selon l'une quelconque des revendications 17 à 20, dans lequel l'objet (7) est recouvert d'un film souple absorbant (25 ; 26) pour augmenter le phénomène d'absorption des ondes élastiques en cas de toucher.

**Claims**

**1.** Method for locating a touch on a tactile surface belonging to an object (7), this method comprising at least the following steps:

(a) a monitoring step in the course of which mechanical elastic waves are caused to propagate in the object from at least one emission point (E) belonging to the object, and said mechanical waves are picked up at at least one reception point (R1, R2) belonging to the object so as to obtain at least one picked-up signal,
(b) and a location step in the course of which a touch on said tactile surface is located by analyzing the picked-up signal,

**characterized in that** said emitted mechanical elastic waves comprise at least two frequency components corresponding to at least two vibratory natural frequencies of the object (7) so as to establish regimes of resonance, and **in that** in the course of the location step, at least certain characteristics of the picked-up signal are compared with a library of reference characteristics, said reference characteristics corresponding respectively to touches in predetermined zones of said tactile surface.

**2.** Method according to claim 1, in which said characteristics of the picked-up signal that are used during the location step comprise at least one amplitude of the signal or one phase of the signal.

**3.** Method according to any of the preceding claims, in which said characteristics of the picked-up signal that are used during the location step correspond to a number N of predetermined frequencies, N being an integer at least equal to 2, preferably at least equal to 10, said predetermined frequencies being natural frequencies of the object, which are excited by said mechanical waves and wherein said predetermined frequencies are such that the spectrum of the signal received exhibits, at said predetermined frequencies, an amplitude greater than a threshold value.

**4.** Method according to claim 3, in which said predetermined frequencies are separated pairwise by a gap greater than a predetermined minimum gap, at least equal to 150 Hz, preferably greater than 200 Hz and in a still more preferred manner greater than 300 Hz, in which said predetermined frequencies are distributed in a span ranging from 10 to 100 kHz, preferably from 15 to 70 kHz, and in which at least one of said predetermined frequencies is less than 30 kHz and at least one of said predetermined frequencies is greater than 50 kHz.

**5.** Method according to any of the preceding claims, in which said mechanical waves are Lamb waves, in and which said Lamb waves are flexural A0 antisymmetric waves.

**6.** Method according to any of the preceding claims, in which the monitoring step is repeated at a rate of several tens of times a second, preferably at least equal to 50 times a second.

**7.** Method according to any of claims 3 to 4, in which in the course of the monitoring step, at least one waveform is emitted at at least one of said predetermined frequencies, during an emission time window having a duration comprised between 10 and 25 ms, for regimes of resonances to be established in said object (7), said waveform comprising N overlaid waveforms is emitted at the N predetermined frequencies, and in which in the course of the monitoring step, the mechanical waves are picked up for a reception time window having a duration of between 5 and 15 ms.

8. Method according to claim 7, in which the reception time window at least partially overlaps the emission time window, said at least one reception point being distinct from said at least one emission point.

9. Method according to claim 7, in which the reception time window follows the emission time window without overlapping it, and in which in the course of the monitoring step, a single emission point, identical to the reception point, is used.

10. Method according to any of claims 1 to 5, in which in the course of the monitoring step, mechanical waves generated by an impulse signal are emitted from the point of emission, and then said mechanical waves are picked up for a reception time window having a duration of between 5 and 15 ms.

11. Method according to any of the preceding claims, in which in the course of the monitoring step, a relative absorption vector $A_{rel} = [Arel_n]$ of the acoustic waves is determined in terms of modulus and phase at the N predetermined frequencies, where:

  - $Arel_n = (r_{im}/r0_{im})e^{j(\varphi im - \varphi 0 im)}$,
  - i is an index lying between 1 and N designating the predetermined frequency,
  - m is an index lying between 1 and M designating the reception poin,
  - n=i+N(m-1),
  - $r0_{im}$ is an amplitude value corresponding to the predetermined frequency i and to the reception point m in the absence of touch on the tactile surface,
  - $r_{im}$ is an amplitude value corresponding to the predetermined frequency i and to the reception point m in the presence of touch on the tactile surface,
  - $\varphi 0_{im}$ is a phase value corresponding to the predetermined frequency i and to the reception point m in the absence of touch on the tactile surface,
  - $\varphi_{im}$ is a phase value corresponding to the predetermined frequency i and to the reception point m in the presence of touch on the tactile surface.

12. Method according to claim 11, in which in the course of the monitoring step, a normalized centered relative absorption vector is determined

$$Anor = \left[ \frac{Ac_n}{\sqrt{\sum_{n=1}^{M.N}(Arel_n - \langle Arel \rangle)^2}} \right], \quad \text{with}$$

$Ac=[Ac_n]=[Arel_n - \langle Arel \rangle]$ and

$$\langle Arel \rangle = \frac{\sum_{n=1}^{M.N} Arel_n}{N.M} .$$

and in which in the course of the location step, the position of the touch is deduced from a cross-correlation test between an absorption vector related to the relative absorption vector $A_{rel}$ and at least one reference matrix consisting of a set of reference absorption vectors $A_{ref}(x_t, y_u)$ corresponding to touches at predetermined points with coordinates $(x_t, y_u)$ sampled on the tactile surface of the object.

13. Method according to claim 12, in which in the course of the location step, the position of the touch is deduced from a cross-correlation test between a centered relative absorption vector $A_{nor}$ and at least one reference matrix consisting of a set of normalized centered relative reference absorption vectors $A_{ref}$ $(x_t, y_u)$ corresponding to touches at predetermined points with coordinates $(x_t, y_u)$ sampled on the tactile surface of the object and in which in the course of the location step, several reference matrices corresponding to several dimensions of touch are used, a dimension of the touch is deduced from the relative absorption vector $A_{rel}$ so as to determine the reference matrix to be used.

14. Method according to claim 13, in which in the course of the location step, a sub-vector $A_{relx}$ corresponding to the predetermined frequencies that are most sensitive to the dimension of the touch is extracted from the relative absorption vector $A_{rel}$, and the modulus of this sub-vector $A_{relx}$ is calculated, then from this is deduced the reference matrix to be used to perform the cross-correlation operation and deduce from this the position of the touch, and in which to construct the sub-vector $A_{relx}$, only the predetermined frequencies for which the components of the relative absorption vector have a modulus of less than 1 and having a variation over the plate of less than a threshold value are retained.

15. Method according to claim 13, in which the reference matrix consists of a set of reference absorption vectors $A_{ref}(x_t, y_u)$ corresponding to touches at predetermined points with coordinates $(x_t, y_u)$ sampled on the tactile surface of the object with a spacing of less than half the wavelength of the smallest spatial frequency of the excitation spectrum.

16. Method according to claim 12, in which in the course of the observation step, a modulus of the relative absorption vector is calculated and this modulus is compared with a predetermined threshold value to determine whether a touch has occurred on the tactile surface, and this modulus is compared in the course of time with a particular dynamic profile to determine whether a touch has occurred on the tactile surface.

17. A device for locating a touch on a tactile surface belonging to an object (7), this device comprising at least one transducer (E, R1, R2) adapted for emitting and picking up mechanical elastic waves in the object, said transducer being linked to at least one electronic central unit adapted for:

   - causing mechanical waves to be propagated in the object by said at least one transducer, and causing said mechanical waves to be picked up by said at least one transducer,
   - and locating a touch on said tactile surface by analyzing the picked-up signal,

   characterized in that said emitted mechanical elastic waves comprise at least two frequency components corresponding to at least two vibratory natural frequencies of the object (7) so as to establish regimes of resonance, and wherein said electronic central unit (2, 13) is adapted for comparing at least certain characteristics of the picked-up signal with a library of reference characteristics, said reference characteristics corresponding respectively to touches in predetermined zones of said tactile surface.

18. Device according to claim 17, constituting a touch keyboard, and in which the object comprises a plate (7) which includes said tactile surface.

19. Device according to claim 17, adapted for continuously moving a pointer over a display screen.

20. Device according to any of the claims 17 to 19, wherein the at least one transducer (E, R1, R2) is arranged not to be situated on any axis of symmetry of the object (7).

21. Device according to any of the claims 17 to 20, wherein said object (7) is covered with an absorbent flexible film (25 ; 26) so as to increase the phenomenon of absorption of the elastic waves in the event of a touch.

## Patentansprüche

1. Verfahren zur Lokalisierung einer Berührung auf einer zu einem Gegenstand (7) gehörenden berührungsempfindlichen Fläche, wobei dieses Verfahren mindestens die folgenden Schritte enthält:

   (a) einen Überwachungsschritt, während dessen man elastische mechanische Wellen sich im Gegenstand ausgehend von mindestens einem zum Gegenstand gehörenden Sendepunkt (E) ausbreiten lässt, und die mechanischen Wellen an mindestens einem zum Gegenstand gehörenden Empfangspunkt (R1, R2) empfangen werden, um mindestens ein empfangenes Signal zu erhalten,
   (b) und einen Lokalisierungsschritt, während dessen auf der berührungsempfindlichen Fläche eine Berührung lokalisiert wird, indem das empfangene Signal analysiert wird,

   dadurch gekennzeichnet, dass die gesendeten elastischen mechanischen Wellen mindestens zwei Frequenzkomponenten aufweisen, die mindestens zwei Eigenschwingungsfrequenzen des Gegenstands (7) entsprechen, um Resonanzbetriebe aufzubauen, und
   dass während des Lokalisierungsschritts mindestens bestimmte Merkmale des empfangenen Signals mit einer Bibliothek von Referenzmerkmalen verglichen werden, wobei die Referenzmerkmale jeweils Berührungen in vorbestimmten Zonen der berührungsempfindlichen Fläche entsprechen.

2. Verfahren nach Anspruch 1, wobei die Merkmale des empfangenen Signals, die während des Lokalisierungsschritts verwendet werden, mindestens eine Amplitude des Signals oder mindestens eine Phase des Signals enthalten.

3. Verfahren nach einem der vorhergehenden Ansprüche, wobei die Merkmale des empfangenen Signals, die während des Lokalisierungsschritts verwendet werden, einer Anzahl N vorbestimmter Frequenzen entsprechen, wobei N eine ganze Zahl mindestens gleich 2, vorzugsweise mindestens gleich 10 ist, wobei die vorbestimmten Frequenzen Eigenfrequenzen des Gegenstands sind, die durch die mechanischen Wellen angeregt werden, und wobei die vorbestimmten Frequenzen so sind, dass das Spektrum des empfangenen Signals bei den vorbestimmten Frequenzen eine Amplitude höher als ein Schwellwert aufweist.

4. Verfahren nach Anspruch 3, wobei die vorbestimmten Frequenzen paarweise durch einen Abstand getrennt sind, der höher als ein vorbestimmter Mindestabstand mindestens gleich 150 Hz, vorzugsweise höher als 200 Hz und noch weiter bevorzugt höher als 300 Hz ist, und wobei die vorbestimmten Frequenzen in einem Bereich verteilt sind, der von 10 bis 100 kHz, vorzugsweise von 15 bis 70 kHz geht, wobei eine der vorbestimmten Frequenzen niedriger als 30 kHz und mindestens eine der vorbestimmten Frequenzen höher als 50 kHz ist.

5. Verfahren nach einem der vorhergehenden Ansprüche, wobei die mechanischen Wellen Lambwellen sind, wobei die Lambwellen antisymmetrische Biegewellen A0 sind.

6. Verfahren nach einem der vorhergehenden Ansprüche, wobei der Überwachungsschritt in einem Takt von mehreren zehn Mal pro Sekunde, vorzugsweise mindestens gleich 50 Mal pro Sekunde, wiederholt wird.

7. Verfahren nach einem der Ansprüche 3 bis 4, wobei während des Überwachungsschritts mindestens eine Wellenform auf mindestens einer der vorbestimmten Frequenzen in einem Sendezeitfenster einer Dauer zwischen 10 und 25 ms gesendet wird, damit sich Resonanzen in dem Gegenstand (7) aufbauen, wobei die Wellenform N Wellenformen enthält, die die N vorbestimmten Frequenzen überlagern, und wobei während des Überwachungsschritts die mechanischen Wellen während eines Empfangszeitfensters empfangen werden, das eine Dauer zwischen 5 und 15 ms hat.

8. Verfahren nach Anspruch 7, wobei das Empfangszeitfenster das Sendezeitfenster zumindest teilweise überdeckt, wobei der mindestens eine Empfangspunkt sich von dem mindestens einen Sendepunkt unterscheidet.

9. Verfahren nach Anspruch 7, wobei das Empfangszeitfenster auf das Sendezeitfenster folgt, ohne es zu überdecken, und wobei während des Überwachungsschritts ein einziger Sendepunkt verwendet wird, der mit dem Empfangspunkt zusammenfällt.

10. Verfahren nach einem der Ansprüche 1 bis 5, wobei während des Überwachungsschritts ausgehend vom Sendepunkt mechanische Wellen gesendet werden, die von einem Impulssignal erzeugt werden, dann die mechanischen Wellen während eines Empfangszeitfensters empfangen werden, das eine Dauer zwischen 5 und 15 ms hat.

11. Verfahren nach einem der vorhergehenden Ansprüche, wobei während des Überwachungsschritts ein Vektor relativer Absorption **Arel =[Areln]** der akustischen Wellen in Modul und in Phase auf den N vorbestimmten Frequenzen bestimmt wird, wobei:

- **Areln = (rim/r0im) ej(φim-φ0im)**,
- i ein Index zwischen 1 und N ist, der die vorbestimmte Frequenz bezeichnet,
- m ein Index zwischen 1 und M ist, der den Empfangspunkt bezeichnet,
- n=i+N(m-1),
- r0im ein Amplitudenwert entsprechend der vorbestimmten Frequenz i und dem Empfangspunkt m in Abwesenheit einer Berührung auf der berührungsempfindlichen Fläche ist,
- rim ein Amplitudenwert entsprechend der vorbestimmten Frequenz i und dem Empfangspunkt m in Anwesenheit einer Berührung auf der berührungsempfindlichen Fläche ist,
- φ0im ein Phasenwert entsprechend der vorbestimmten Frequenz i und dem Empfangspunkt m in Abwesenheit einer Berührung auf der berührungsempfindlichen Fläche ist,
- φim ein Phasenwert entsprechend der vorbestimmten Frequenz i und dem Empfangspunkt m in Anwesenheit einer Berührung auf der berührungsempfindlichen Fläche ist.

12. Verfahren nach Anspruch 11, wobei während des Überwachungsschritts ein normierter zentrierter relativer Absorptionsvektor

$$ \text{Anor} = \left[ \frac{\text{Ac}_n}{\sqrt{\sum_{n=1}^{M.N} \left(\text{Arel}_n - (\text{Arel})\right)^2}} \right] , \text{ mit} $$

Ac = [ACn]=[Areln-(Arel)] und

$$ (\text{Arel}) = \frac{\sum_{n=1}^{M.N} \text{Arel}_n}{N.M} , $$

bestimmt wird, und wobei während des Lokalisierungsschritts die Position der Berührung von einem Kreuzkorrelationstest zwischen einem mit dem Vektor relativer Absorption Arel verbundenen Absorptionsvektor und mindestens einer Referenzmatrix abgeleitet wird, die aus einer Einheit von Referenzabsorptionsvektoren Aref(xt,yu) entsprechend Berührungen an vorbestimmten Koordinatenpunkten (xt, yu) besteht, die auf der berührungsempfindlichen Fläche des Gegenstands abgetastet werden.

13. Verfahren nach Anspruch 12, wobei während des Lokalisierungsschritts die Position der Berührung von einem Kreuzkorrelationstest zwischen einem zentrierten relativen Absorptionsvektor Anor und mindestens einer Referenzmatrix abgeleitet wird, die aus einer Einheit von normierten zentrierten relativen Referenzabsorptionsvektoren $A_{ref}(x_t,y_u)$ entsprechend Berührungen an vorbestimmten Koordinatenpunkten $(x_t,y_u)$ besteht, die auf der berührungsempfindlichen Fläche des Gegenstands abgetastet werden, und wobei während des Lokalisierungsschritts mehrere Bezugsmatrizen verwendet werden, die mehreren Berührungsausdehnungen entsprechen, eine Berührungsausdehnung ausgehend vom relativen Absorptionsvektor $A_{ref}$ abgeleitet wird, um die zu nutzende Referenzmatrix zu bestimmen.

14. Verfahren nach Anspruch 13, wobei während des Lokalisierungsschritts aus dem Vektor relativer Absorption $A_{rel}$ ein Subvektor $A_{relx}$ entnommen wird, der den für die Ausdehnung der Berührung empfindlichsten vorbestimmten Frequenzen entspricht, und der Modul dieses Subvektors $A_{relx}$ berechnet wird, dann daraus die Referenzmatrix abgeleitet wird, die zu verwenden ist, um die Kreuzkorrelationsoperation durchzuführen und daraus die Position der Berührung abzuleiten, und wobei, um den Subvektor $A_{relx}$ zu bilden, nur die vorbestimmten Frequenzen gewählt werden, bei denen die Komponenten des Vektors relativer Absorption einen Modul geringer als 1 und mit einer Variation auf der Platte geringer als ein Schwellwert haben.

15. Verfahren nach Anspruch 13, wobei die Bezugsmatrix aus einer Einheit von Rererenzabsorptionsvektoren $A_{ref}(x_t,y_u)$ besteht, die Berührungen an vorbestimmten Koordinatenpunkten $(x_t,y_u)$ entsprechen, die auf der berührungsempfindlichen Fläche des Gegenstands in einem Abstand geringer als die halbe Wellenlänge der kleinsten Raumfrequenz des Anregungsspektrums abgetastet werden.

16. Verfahren nach Anspruch 12, wobei während des Beobachtungsschritts ein Modul des relativen Absorptionsvektors berechnet und dieser Modul mit einem vorbestimmten Schwellwert verglichen wird, um zu bestimmen, ob eine Berührung auf der berührungsempfindlichen Fläche stattgefunden hat, oder dieser Modul im Laufe der Zeit mit einem bestimmten dynamischen Profil verglichen wird, um zu bestimmen, ob eine Berührung auf der berührungsempfindlichen Fläche stattgefunden hat.

17. **Vorrichtung** zur Lokalisierung einer Berührung auf einer zu einem Gegenstand (7) gehörenden berührungsempfindlichen Fläche, wobei diese Vorrichtung mindestens einen Wandler (E, R1, R2) aufweist, der geeignet ist, um elastische mechanische Wellen im Gegenstand zu senden und zu empfangen, wobei der Wandler mit mindestens einer elektronischen Zentraleinheit (2, 13) verbunden ist, die geeignet ist, um:

- im Gegenstand mechanische Wellen sich durch den mindestens einen Wandler ausbreiten zu lassen und die mechanischen Wellen von dem mindestens einen Wandler empfangen zu lassen,
- und eine Berührung auf der berührungsempfindlichen Fläche zu lokalisieren, indem das empfangene Signal analysiert wird,

**dadurch gekennzeichnet, dass** die gesendeten elastischen mechanischen Wellen mindestens zwei Frequenzkomponenten aufweisen, die mindestens zwei Eigenschwingungsfrequenzen des Gegenstands (7) entsprechen, um Resonanzbetriebe aufzubauen, und dass die elektronische Zentraleinheit (2, 13) geeignet ist, um mindestens bestimmte Merkmale des empfangenen Signals mit einer Bibliothek von Referenzmerkmalen zu vergleichen, wobei die Referenzmerkmale jeweils Berührungen in vorbestimmten Zonen der berührungsempfindlichen Fläche entsprechen.

18. Vorrichtung nach Anspruch 17, die eine Bildschirmtastatur bildet, und bei der der Gegenstand eine Platte (7) aufweist, die die berührungsempfindliche Fläche umfasst.

19. Vorrichtung nach Anspruch 17, die geeignet ist, um kontinuierlich einen Zeiger auf einem Anzeigebildschirm zu verschieben.

20. Vorrichtung nach einem der Ansprüche 17 bis 19, wobei der mindestens eine Wandler (E, R1, R2) außerhalb jeder Symmetrieachse des Gegenstands (7) angeordnet ist.

21. Vorrichtung nach einem der Ansprüche 17 bis 20, bei der der Gegenstand (7) von einer absorbierenden flexiblen Folie (25; 26) bedeckt ist, um das Phänomen der Absorption der elastischen Wellen im Fall einer Berührung zu erhöhen.

FIG.1.

FIG.2.

# FIG.3.

# FIG.4.

# FIG.5.

FIG.6.

FIG.7.

FIG.8.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2644309 A
- WO 2006133018 A
- FR 2841022 A
- WO 03067511 A